(19) **Europäisches Patentamt / European Patent Office / Office européen des brevets**

(11) **EP 2 675 769 B1**

(12) **FASCICULE DE BREVET EUROPEEN**

(45) Date de publication et mention de la délivrance du brevet:
**20.09.2017 Bulletin 2017/38**

(21) Numéro de dépôt: **12705449.2**

(22) Date de dépôt: **09.02.2012**

(51) Int Cl.:
*C04B 35/66* (2006.01)    *C04B 35/12* (2006.01)
*C04B 35/622* (2006.01)    *C03B 5/43* (2006.01)
*C03B 5/167* (2006.01)    *C03B 5/237* (2006.01)

(86) Numéro de dépôt international:
**PCT/IB2012/050590**

(87) Numéro de publication internationale:
**WO 2012/110923 (23.08.2012 Gazette 2012/34)**

(54) **PRODUIT FRITTÉ À BASE D'OXYDE DE CHROME DOPÉ**

SINTERWERKSTOFF AUF BASIS VON DOTIERTEM CHROMOXID

SINTERED MATERIAL BASED ON DOPED CHROMIUM OXIDE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.02.2011 FR 1151228**

(43) Date de publication de la demande:
**25.12.2013 Bulletin 2013/52**

(73) Titulaire: **Saint-Gobain Centre de Recherches et d'Etudes Européen 92400 Courbevoie (FR)**

(72) Inventeurs:
• **CITTI, Olivier F-84300 Cavaillon (FR)**
• **FOURCADE, Julien Shrewsbury, MA 01545 (US)**

(74) Mandataire: **Nony 11 rue Saint-Georges 75009 Paris (FR)**

(56) Documents cités:
**WO-A1-2010/119422**    **FR-A1- 2 647 435**
**US-A- 2 498 622**    **US-A1- 2010 019 419**

• **GOERENZ E ED - ROUTSCHKA G ET AL: "Taschenbuch Feuerfeste Werkstoffe, Chromoxid- und Zinnoxid-Werkstoffe", 31 juillet 2007 (2007-07-31), TASCHENBUCH FEUERFESTE WERKSTOFFE: AUFBAU, EIGENSCHAFTEN, PRÜFUNG, VULKAN VERLAG, ESSEN, PAGE(S) 143 - 147, XP002554648, ISBN: 978-3-8027-3157-0 Titre du chapitre 4 le document en entier tableaux 4.22 a-c**
• **DATABASE WPI Week 197524, Derwent Publications Ltd., London, GB; AN 1975-40562W -& SU 442 175 A (UKR REFRACTORY INST) 19 Novembre 1974**

**Description**

**Domaine technique**

L'invention concerne notamment un nouveau produit fritté élaboré à partir d'oxyde de chrome et son utilisation, notamment en four de verrerie.

**Etat de la technique**

Parmi les produits réfractaires, on distingue les produits fondus et coulés et les produits frittés.

A la différence des produits frittés, les produits fondus et coulés comportent le plus souvent une phase vitreuse intergranulaire très abondante qui vient remplir un réseau de grains cristallisés. Les problèmes rencontrés dans leurs applications respectives par les produits frittés et par les produits fondus et coulés, et les solutions techniques adoptées pour les résoudre, sont donc généralement différents. Par ailleurs, du fait des différences importantes entre les procédés de fabrication, une composition mise au point pour fabriquer un produit fondu et coulé n'est pas *a priori* utilisable telle quelle pour fabriquer un produit fritté, et réciproquement.

Les produits frittés sont obtenus par mélange de matières premières appropriées puis mise en forme à cru de ce mélange et cuisson de la pièce crue résultante à une température et pendant un temps suffisants pour obtenir le frittage de cette pièce crue.

Les produits frittés, selon leur composition chimique, sont destinés à des industries très variées.

FR 2 647 435 propose des produits frittés à base d'oxyde de chrome comportant de l'oxyde de titane et de la zircone monoclinique et présentant une bonne résistance aux chocs thermiques et à la corrosion par le verre fondu.

EP 546 432 propose des produits frittés à base d'oxyde de chrome comportant de l'oxyde de titane.

WO2010119422 propose des produits frittés à base d'oxyde de chrome comportant de l'oxyde de titane et de l'alumine dans des proportions permettant d'améliorer la résistance à la sublimation et à la corrosion.

L'ouvrage « Taschenbuch Feuerfeste Werkstoffe: Aufbau, Eigenschaften, Prüfung », E. Ed. Goerenz, G. Routschka et al., Vulkan Verlag, Essen, 2007, ISBN 978-3-8027-3157-0, section ″Chromoxid- und Zinnoxid-Werkstoffe″, pages 143 à 147 et SU 442175 décrivent des produits réfractaires frittés comportant notamment des oxydes de chrome, de titane et de magnésium.

Les produits frittés élaborés à partir d'oxyde de chrome sont aujourd'hui largement utilisés dans les fours de verrerie, en particulier pour les fours de fusion des verres destinés à la fabrication de fibres de verre. En effet, les produits d'oxyde de chrome denses présentent une excellente résistance à la corrosion. Ainsi, US 4,724,224 décrit un bloc fritté à base d'oxyde de chrome présentant une bonne résistance à la corrosion par le verre en fusion. Ce produit comporte au moins environ 1 % de silice.

Néanmoins, l'oxyde de chrome est particulièrement sensible à la sublimation lorsqu'il est soumis à des températures supérieures à 1000°C dans une atmosphère oxydante, en particulier en présence d'humidité.

Enfin, si le verre contient des espèces volatiles telles que des borates alcalins ou de la soude (NaOH), ces éléments réagissent avec l'oxyde de chrome pour former des chromates alcalins tels que $Na_2CrO_4$. Ces réactions favorisent la sublimation de l'oxyde de chrome, augmentent la corrosion, et peuvent entraîner la recondensation d'oxydes de chrome et de chromates dans des zones plus froides du four, comme dans le circuit de mise à l'atmosphère des fumées (sous forme de poussières) ou encore sur les faces des blocs moins exposées à la chaleur, par exemple à l'arrière des blocs. Quand cette recondensation se produit à l'arrière des blocs de feeders ou des blocs de cuve, il y a également un risque accru de lâcher d'inclusions riches en chrome dans le verre.

L'actuel développement des verres de très haute qualité augmente les exigences pour les produits réfractaires des fours de verrerie, notamment pour les produits utilisés en cuve. Il existe donc un besoin pour un nouveau produit réfractaire présentant une bonne résistance à la sublimation.

La présente invention vise à satisfaire ce besoin.

**Résumé de l'invention**

A cet effet, l'invention propose un produit fritté présentant une composition chimique moyenne telle que, en pourcentages massiques sur la base des oxydes

$$Cr_2O_3 : 80,0 - 99,0 \%$$

$$0,5\ \% \le TiO_2 \le 9,0\ \%$$

$$0,3\ \% < MgO \le 3,0\ \%$$

$$ZrO_2 < 4,5\ \%$$

pourvu que le rapport molaire $TiO_2$ / MgO soit compris entre 1,5 et 9,0 et que le rapport molaire $TiO_2$/ $Cr_2O_3$ soit inférieur à 0,12,

le produit comportant moins de 2,0 %, en masse sur la base des oxydes, d'oxydes autres que Cr203, $TiO_2$, MgO et Zr02.

De manière inattendue, les inventeurs ont découvert que cette composition permet d'atteindre des performances remarquables, et en particulier une très bonne résistance à la sublimation.

Un produit selon l'invention est donc bien adapté à une application comme bloc de cuve, en particulier lorsqu'il est destiné à entrer en contact avec des verres en fusion tels que les verres de renforcement (verres E).

De préférence, un produit selon l'invention peut encore présenter une ou plusieurs des caractéristiques optionnelles suivantes :

- Le rapport molaire $TiO_2$/MgO est supérieur à 2,0, supérieur à 2,5, supérieur à 3,0 et/ou inférieur à 8,0, inférieur à 7,5, inférieur à 7,0, inférieur à 6,0, voire inférieur à 5,5 ou inférieur à 5,0.
- Le rapport molaire $TiO_2$/$Cr_2O_3$ est inférieur à 0,11, inférieur à 0,10, inférieur à 0,09, voire inférieur à 0,08.
- La teneur massique en oxyde de chrome est supérieure à 85,0 %, supérieure à 87,0 %, supérieure à 90,0 % et/ou inférieure à 98,0 %, inférieure à 97,0 %.
- La teneur massique en oxyde de titane $TiO_2$ est supérieure à 0,7%, de préférence supérieure à 1,0 %, de préférence encore supérieure à 1,5%, voire supérieure à 2,0 %, supérieure à 2,5 %, supérieure à 3,0 % et/ou inférieure à 8,0 %, de préférence inférieure à 7,0%, voire inférieure à 6,0 %, inférieure à 5,5 %, ou inférieure à 5,0 %.
- La teneur massique en MgO est inférieure à 2,5 %, inférieure à 2,0 %, inférieure à 1,8 %, inférieure à 1,5 %, inférieure à 1,2 %, inférieure à 1,0 %.
- Dans un mode de réalisation, le produit ne comporte pas de zircone. Dans un autre mode de réalisation, la teneur massique en zircone ($ZrO_2$) est supérieure à 0,2 %, supérieure à 0,5 %, supérieure à 1,0 %, supérieure à 2,0 %, et/ou inférieure à 4,0 %.
- La teneur massique totale des espèces oxydes autres que $Cr_2O_3$, MgO, $TiO_2$ et $ZrO_2$ dans le produit fritté est inférieure 1,5 %, de préférence inférieure à 1,0 %, de

  préférence inférieure à 0,9 %, de préférence encore inférieure à 0,7 %, et, de préférence toujours, inférieure à 0,5 %, en pourcentages en masse sur la base des oxydes.
- Les oxydes représentent plus de 95 %, plus de 98 %, plus de 99 %, voire sensiblement 100 % de la masse du produit.
- La porosité apparente est inférieure à 15 %, de préférence inférieure à 10 %, de préférence inférieure à 5 %, de préférence inférieure à 2 %, de préférence inférieure à 1 %.
- Le produit présente une densité apparente supérieure à 4,0 g/cm$^3$, de préférence supérieure à 4,4 g/cm$^3$, de préférence supérieure à 4,5 g/cm$^3$, voire supérieure à 4,6 g/cm$^3$.
- Le produit se présente sous la forme d'un bloc, présentant de préférence une masse supérieure à 5 kg, de préférence supérieure à 10 kg.

L'invention concerne également un procédé de fabrication d'un produit fritté comportant les étapes suivantes :

a) mélange de matières premières pour former une charge de départ,
b) mise en forme d'une pièce crue à partir de ladite charge de départ,
c) frittage de ladite pièce crue de manière à obtenir ledit produit fritté,

ce procédé étant remarquable en ce que la charge de départ est déterminée de manière que ledit produit fritté soit conforme à l'invention.

De préférence, un procédé selon l'invention peut encore présenter une ou plusieurs des caractéristiques optionnelles suivantes :

- Les matières premières particulaires apportant les oxydes (poudres d'oxydes et éventuellement chamotte(s)) présentent chacune une taille médiane inférieure à 150 $\mu$m, de préférence inférieure à 100 $\mu$m, de préférence inférieure à 50 $\mu$m.

- Les oxydes $Cr_2O_3$, $TiO_2$ et MgO et éventuellement $ZrO_2$, sont présents dans la charge de départ sous la forme de particules desdits oxydes, et éventuellement de chamotte desdits oxydes, l'ensemble desdites particules formant un mélange de poudres présentant une taille médiane inférieure à 50 $\mu$m, de préférence inférieure à 40 $\mu$m, de préférence inférieure à 20 $\mu$m, de préférence inférieure à 10 $\mu$m, voire inférieure à 5 $\mu$m.

- L'ensemble des particules comportant de l'oxyde $Cr_2O_3$ comporte de préférence plus de 70 %, plus de 80 %, plus de 90 %, plus de 95 %, plus de 99 %, voire sensiblement 100 % de $Cr_2O_3$ en pourcentage massique sur la masse de l'ensemble.

- L'ensemble des particules comportant de l'oxyde $TiO_2$ comporte de préférence plus de 70 %, plus de 80 %, plus de 90 %, plus de 95 %, plus de 99 %, voire sensiblement 100 % de $TiO_2$ en pourcentage massique sur la masse de l'ensemble.

- L'ensemble des particules comportant de l'oxyde MgO comporte de préférence plus de 70 %, plus de 80 %, plus de 90 %, plus de 95 %, plus de 99 %, voire sensiblement 100 % de MgO en pourcentage massique sur la masse de l'ensemble.

- L'ensemble des particules comportant de l'oxyde $ZrO_2$ comporte de préférence plus de 70 %, plus de 80 %, plus de 90 %, plus de 95 %, plus de 99 %, voire sensiblement 100 % de $ZrO_2$ en pourcentage massique sur la masse de l'ensemble.

- La charge de départ comporte au moins 10 % et/ou moins de 50 % de chamotte, en pourcentages en masse sur la base des oxydes de la charge de départ.

- La chamotte dans la charge de départ présente une taille médiane inférieure à 50 $\mu$m, de préférence inférieure à 40 $\mu$m, de préférence inférieure à 20 $\mu$m.

- La charge de départ comporte des particules comportant, voire sensiblement constituées par, $MgTiO_3$ et/ou $Mg_2TiO_4$ et/ou $MgTi_2O_5$. Dans un mode de réalisation, plus de 50 %, plus de 75 %, voire sensiblement 100 %, en masse, du MgO est apporté sous la forme $MgTiO_3$.

- La mise en forme est réalisée par pressage isostatique.

L'invention concerne également un produit fritté fabriqué ou pouvant être fabriqué suivant un procédé selon l'invention.

L'invention concerne enfin l'utilisation d'un produit fritté selon l'invention, ou fabriqué ou pouvant être fabriqué suivant un procédé selon l'invention, dans un four de verrerie, en particulier dans une zone du four susceptible d'entrer en contact avec du verre en fusion ou avec des fumées émises par du verre en fusion, par exemple dans un circuit de mise à l'atmosphère des fumées.

L'invention concerne ainsi également une installation comportant un produit selon l'invention, ledit produit étant disposé dans une région de ladite installation où il est susceptible d'entrer en contact avec un environnement oxydant à plus de 1000°C ou avec des fumées émises par du verre en fusion. Le produit peut en particulier être disposé dans une région de ladite cuve où il est susceptible d'entrer en contact avec un verre en fusion, en particulier avec un verre de renforcement, par exemple de type verre E, verre R ou verre S, un verre AR (Alcali Resistant) ou encore un verre pour fibres d'isolation.

D'autres caractéristiques et avantages de l'invention apparaîtront encore à la lecture de la description détaillée qui va suivre.

**Définitions**

Par « impuretés », on entend les constituants inévitables, introduits nécessairement avec les matières premières ou résultant de réactions avec ces constituants. Les impuretés ne sont pas des constituants nécessaires, mais seulement tolérés.

On appelle « taille » d'une particule, la moyenne de sa plus grande dimension dM et de sa plus petite dimension dm : (dM+dm)/2.

Classiquement, la « taille maximale » d'une particule correspond à la maille de tamis standard minimale à travers laquelle ladite particule peut passer.

Classiquement, on appelle « taille médiane » d'un mélange de particules, la taille divisant les particules de ce mélange en première et deuxième populations égales en nombre, ces première et deuxième populations ne comportant que des particules présentant une taille supérieure, et inférieure respectivement, à la taille médiane.

Classiquement, on appelle « chamotte » une poudre de particules obtenue par broyage, à la granulométrie désirée, d'un corps fritté. Le corps fritté peut être préparé spécifiquement ou bien être un rebut de fabrication ou encore un produit usagé pouvant être ainsi recyclé.

Un verre E présente une analyse chimique suivante, selon la norme ASTM D 578 - 05, « *Standard Specification for Glass Fiber Strands »,* (en pourcentages massiques) :

- $B_2O_3$ : 0 - 10 %
- CaO : 16 - 25 %
- $Al_2O_3$ : 12 - 16 %
- $SiO_2$ : 52 - 62 %
- MgO : 0 - 5 %
- Oxydes alcalins : 0 - 2 %
- $TiO_2$ : 0 - 1,5 %
- $Fe_2O_3$ : 0,05 - 0,8 %
- Fluor : 0 - 1 %.

Sauf mention contraire, tous les pourcentages sont des pourcentages massiques sur la base des oxydes lorsqu'il est fait référence au produit fritté ou à la charge de départ.

## Description détaillée

Un produit selon l'invention peut être fabriqué suivant les étapes a) à c) décrites ci-dessus.

Ces étapes sont conventionnelles, mais, à l'étape a), la charge de départ est déterminée, de manière bien connue de l'homme du métier, de façon que le produit fritté obtenu à l'issue de l'étape c) présente des teneurs en $Cr_2O_3$, $TiO_2$, MgO et éventuellement $ZrO_2$ qui appartiennent aux plages de l'invention décrites précédemment, en particulier aux plages préférées.

Une teneur minimale de $TiO_2$ est considérée comme nécessaire pour obtenir un effet technique utile. La teneur en $TiO_2$ doit cependant être limitée pour éviter de diminuer la résistance à la corrosion.

Dans un mode de réalisation, on n'ajoute pas de zircone dans la charge de départ. Dans un autre mode de réalisation cependant, la charge de départ est déterminée de manière que le produit fritté comprenne de la zircone . Sa résistance aux chocs thermiques en est avantageusement améliorée.

La charge de départ est de préférence également déterminée de manière que la teneur totale des espèces oxydes autres que $Cr_2O_3$, $TiO_2$, MgO, et éventuellement $ZrO_2$, dans le produit fritté, ci-après les « autres espèces oxydes », soit limitée. On introduit de préférence dans la charge de départ moins de 1% en masse de matières premières qui ne sont pas des sources de $Cr_2O_3$, $TiO_2$ et MgO, voire éventuellement $ZrO_2$.

Par définition, les autres espèces oxydes constituent le complément à 100 % des oxydes $Cr_2O_3$, $TiO_2$ et MgO, voire éventuellement $ZrO_2$. La limitation de la teneur totale de ces autres espèces oxydes permet avantageusement d'augmenter la teneur des oxydes $Cr_2O_3$, $TiO_2$ et MgO, voire éventuellement $ZrO_2$, et en particulier la teneur en oxyde de chrome. Elle permet également de limiter la teneur d'espèces nuisibles, comme la silice, dont la présence tend à réduire la résistance à la corrosion.

De préférence, les autres espèces oxydes sont constituées par les impuretés, c'est-à-dire qu'aucune autre espèce que $Cr_2O_3$, $TiO_2$ et MgO et éventuellement $ZrO_2$ n'est introduite dans la charge de départ dans le but de modifier la composition du produit fritté. A des teneurs inférieures à 3,0 % dans le produit fritté, en pourcentage en masse sur la base des oxydes, on considère que l'effet des impuretés ne modifie pas substantiellement le résultat obtenu. De préférence, la teneur totale en impuretés dans le produit fritté est inférieure à 1,0 %, de préférence encore inférieure à 0,9 %, en pourcentages en masse sur la base des oxydes.

De préférence, la teneur de chacune des impuretés dans le produit fritté est inférieure à 0,5 %, inférieure à 0,3 %, voire inférieure à 0,1 % ou inférieure à 0,05 %.

Les impuretés comprennent en particulier $Al_2O_3$, $Fe_2O_3$, $P_2O_5$, $SiO_2$, et les oxydes alcalins comme $Na_2O$ et $K_2O$, et, parmi les oxydes alcalino-terreux, CaO, SrO et BaO.

De préférence, la charge de départ est déterminée de manière que, dans le produit fritté, on retrouve, en pourcentages en masse sur la base des oxydes :

- $Al_2O_3$ < 1,0 %, de préférence $Al_2O_3$ < 0,5 % ; et/ou

- $Fe_2O_3$ < 0,2 %, de préférence $Fe_2O_3$ < 0,1 %, de préférence encore $Fe_2O_3$ < 0,08 % ; et/ou

- $P_2O_5$ < 1,0 %, de préférence $P_2O_5$ < 0,5 % ; et/ou

- $SiO_2$ < 0,9 %, de préférence $SiO_2$ < 0,6 %, de préférence $SiO_2$ < 0,3 %, de préférence $SiO_2$< 0,1 % ; et/ou

- $Na_2O$ < 0,2 %, de préférence $Na_2O$ < 0,1 % ; et/ou

- $K_2O$ < 0,2 %, de préférence $K_2O$ < 0,1 % avec de préférence $Na_2O + K_2O$ < 0,2 %, de préférence $Na_2O + K_2O$ < 0,1 %.

- CaO < 0,6 %, de préférence CaO < 0,5 %, de préférence CaO < 0,2 % ; et/ou

- SrO < 0,6%, de préférence SrO < 0,5 %, de préférence SrO < 0,2 %; et/ou

- BaO < 0,6%, de préférence BaO < 0,5 %, de préférence BaO < 0,2 %.

Une teneur en $Al_2O_3$ limitée permet d'éviter le risque de formation de défauts réfractaires dans le bain de verre en fusion.

Les oxydes alcalins comme $Na_2O$ et $K_2O$ sont des espèces volatiles et leur teneur doit donc être limitée. Cette limitation permet par ailleurs d'éviter le risque de formation de chromates.

Une teneur en CaO et/ou SrO et/ou en BaO limitée permet d'éviter le risque de formation de chromates.

Une teneur en $SiO_2$ limitée permet d'avoir une bonne résistance à la corrosion.

La charge de départ est également déterminée pour que les oxydes représentent de préférence plus de 99,9 % de la masse du produit fritté, de préférence environ 100 % de la masse du produit fritté.

De préférence, dans la charge de départ, les poudres d'oxydes présentent chacune une taille médiane inférieure à 150 $\mu$m, de préférence inférieure à 100 $\mu$m, de préférence inférieure à 50 $\mu$m. De préférence encore, le mélange de ces poudres présente une taille médiane inférieure à 50 $\mu$m, de préférence inférieure à 40 $\mu$m, de préférence inférieure à 20 $\mu$m, de préférence inférieure à 10 $\mu$m, voire inférieure à 5 $\mu$m. La densification de la pièce lors de l'étape de frittage en est avantageusement améliorée.

Il est également préférable que la charge de départ comporte plus de 10 % de chamotte. La structure des particules de chamotte améliore avantageusement le compactage lors de la formation de la pièce crue.

La chamotte peut être obtenue par frittage de poudres de $Cr_2O_3$ et/ou de $TiO_2$ et/ou de MgO et/ou de $ZrO_2$, puis broyage. La chamotte peut en particulier provenir d'un recyclage d'un produit selon l'invention.

La taille maximale des particules de chamotte est de préférence inférieure à 150 $\mu$m, de préférence inférieure à 100 $\mu$m. De préférence, la chamotte présente une taille médiane inférieure à 50 $\mu$m, de préférence inférieure à 20 $\mu$m.

La teneur en chamotte dans la charge de départ est de préférence inférieure à 50 %, inférieure à 40 %, voire inférieure à 30 %, en pourcentage massique de la charge de départ.

Outres les matières premières dosées pour que le produit fritté ait la composition chimique pondérale moyenne désirée, la charge de départ peut encore classiquement comporter des liants habituels, par exemple un liant organique et/ou des défloculants.

A l'étape b), le mélange préparé à l'étape a) peut être versé dans un moule, puis mis en forme, de manière à former une pièce crue.

De préférence, le moule est conformé de manière que le produit fritté obtenu se présente sous la forme d'un bloc présentant une masse supérieure à 5 kg, de préférence à 10 kg. De tels blocs sont bien adaptés aux applications visées.

La mise en forme peut par exemple résulter d'un pressage isostatique, d'un coulage en barbotine, d'un pressage uniaxial, du coulage d'un gel, d'un vibro-coulage ou d'une combinaison de ces techniques.

De préférence, elle résulte d'un pressage isostatique à des pressions supérieures à 100 MPa. Cette technique permet en effet un frittage plus réactif et l'obtention de produits frittés plus denses. La porosité apparente des produits frittés peut ainsi être inférieure à 15 %, de préférence inférieure à 10 %, de préférence inférieure à 5 %, de préférence inférieure à 2 %, de préférence inférieure à 1 %. Leur densité apparente peut être supérieure à 4,0 g/cm$^3$.

A l'étape c), la pièce crue est frittée.

Le frittage est de préférence effectué à une température comprise entre 1400 et 1700°C, sous atmosphère réductrice ou oxydante, de préférence sous atmosphère réductrice et de préférence à pression atmosphérique.

A l'issue du frittage, on obtient un produit fritté selon l'invention.

Avantageusement, un produit fritté fabriqué suivant le procédé ci-dessus présente une résistance à la sublimation Is, suivant le test défini ci-dessous, inférieure à 7,5 x $10^{-6}$ %.$s^{-1}$, inférieure à 6,0 x $10^{-6}$ % $s^{-1}$, inférieure à 5,0 x $10^{-6}$ % $s^{-1}$, voire inférieure à 4,0 x $10^{-6}$ % $s^{-1}$, ou inférieure à 3,5 x $10^{-6}$ % $s^{-1}$.

## Exemples

Les exemples non limitatifs suivants sont donnés dans le but d'illustrer l'invention.

Dans ces exemples, les matières premières employées suivantes ont été choisies, les pourcentages donnés étant des pourcentages massiques sur la base des oxydes :

- Pcr : poudre d'oxyde de chrome contenant environ 99,5 % de $Cr_2O_3$ et dont la taille médiane est de 2,8 $\mu$m ;
- Pti : poudre d'oxyde de titane contenant environ 95 % de $TiO_2$ et dont la taille médiane est de 2,3 $\mu$m ;
- Pmt : poudre contenant environ 99 % de $MgOTiO_2$ dont la taille médiane est de 3 $\mu$m environ ;
- Pzr : poudre contenant environ 99 % de $ZrO_2$ dont la taille médiane est de 3,5 $\mu$m environ ;
- de la chamotte 1 obtenue à partir des poudres de $Cr_2O_3$ et de $TiO_2$, contenant environ 91,5 % de $Cr_2O_3$, 3,8 % de $TiO_2$ et 3,5 % de $ZrO_2$ avec une taille médiane inférieure à 50 $\mu$m ;
- de la chamotte 2 obtenue à partir des poudres de $Cr_2O_3$ et de $TiO_2$, contenant environ 94,2 % de $Cr_2O_3$ et 3,8 % de $TiO_2$ avec une taille médiane inférieure à 50 $\mu$m.

Des blocs réfractaires frittés ont été fabriqués selon les étapes a) à c) décrites précédemment.

A l'étape b), le mélange a été mis en forme par pressage isostatique afin de former des pièces crues de dimensions 100 mm x 100 mm et d'environ 150 mm de hauteur.

A l'étape c), les pièces crues ont alors été frittées sous atmosphère réductrice, à pression atmosphérique et à une température de frittage de 1550°C.

La densité est donnée en pourcentage par rapport à la densité théorique d'un matériau présentant l'analyse chimique de l'échantillon. Cette densité a un impact sur la résistance mécanique du matériau ainsi que sur la résistance à la corrosion et à la sublimation (la porosité favorisant la pénétration du verre fondu ou des espèces agressives contenues dans l'atmosphère du four). Pour ces raisons, un matériau présentant une densité inférieure à 90 % de sa densité théorique n'est pas acceptable dans la plupart des applications.

Pour mesurer la résistance à la corrosion, des échantillons sous la forme de barreaux cylindrique de produit ayant 20 mm de diamètre et une hauteur de 100 mm ont été prélevés et soumis à un test consistant à faire tourner les échantillons immergés dans un bain de verre E pour fibres de renforcement en fusion, porté à 1600°C. La vitesse de rotation autour de l'axe du porte-échantillon était de 6 tours par minute. Une telle vitesse permet de renouveler très fréquemment l'interface de corrosion et rend donc l'essai beaucoup plus sollicitant. Le test a duré 180 heures. A la fin de cette période, pour chaque échantillon, la partie immergée et la partie émergée ont été séparées. On a évalué, pour chaque partie, le volume restant de l'échantillon puis, par différence, le volume perdu pendant le test. On calcule ensuite le pourcentage de volume perdu en faisant le rapport du volume perdu au volume initial. Le pourcentage de volume perdu d'un échantillon du produit de référence (exemple 1) est choisi comme base de comparaison.

Le rapport du pourcentage de volume immergé perdu par corrosion de l'échantillon du produit de référence au pourcentage de volume immergé perdu par corrosion de tout échantillon, multiplié par 100, donne une évaluation de la résistance à la corrosion par le verre de l'échantillon testé par rapport à celle du produit de référence. « Ic » désigne l'indice de corrosion, ainsi défini, dans le tableau 1 suivant ainsi que dans les revendications.

Ainsi, les indices de corrosion supérieurs à 100 correspondent à une moindre perte par corrosion que celle du produit de référence. Les produits en question présentent donc une meilleure résistance à la corrosion par le verre en fusion que le produit de référence. Les indices de corrosion inférieurs à 100 correspondent à une perte par corrosion plus importante que celle du produit de référence. Les produits en question présentent donc une résistance à la corrosion par le verre en fusion plus faible que le produit de référence.

On considère ici que la résistance à la corrosion est particulièrement satisfaisante lorsque la l'indice de corrosion Ic est supérieur à 110.

La résistance à la sublimation est mesurée par analyse thermogravimétrique avec un appareil ATG SETARAM, Modèle TG96. Pour mesurer la résistance à la sublimation, des échantillons sous la forme de barreaux présentant une base carrée de 10 mm de côté et une hauteur de 50 mm ont été prélevés et soumis à un test consistant à suspendre les échantillons dans un environnement contrôlé d'oxygène, à les porter progressivement (augmentation de 10°C / minute) à 1550°C, puis à maintenir cette température pendant un palier de 10 heures. La variation de masse de l'échantillon est enregistrée. On peut ainsi évaluer la perte de masse (différence entre la masse maximale enregistrée au début du palier et la masse minimale enregistrée à la fin du palier) pendant la durée du palier de 10 heures. L'indice Is est la perte de masse, exprimée en pourcentage de la masse maximale de l'échantillon, par seconde.

On considère ici que la résistance à la sublimation est particulièrement satisfaisante lorsque l'indice de sublimation Is est inférieur d'au moins 20 % à celui de l'exemple de référence.

L'exemple 1, produit de référence, est le produit C1215 commercialisé par Saint-Gobain SEFPRO. Ce produit est aujourd'hui utilisé pour les cuves des fours de fusion du verre.

Le tableau 1 indique les matières premières utilisées.

Tableau 1

| n° | % Pcr | % Pti | % Pmt | % Pzr | % Chamotte 1 | % Chamotte 2 |
|---|---|---|---|---|---|---|
| 2** | 98,8 | | 1,2 | | | |
| 3** | 94,0 | 1,0 | 5,0 | | | |
| 4** | 92,0 | 3,0 | 5,0 | | | |
| 5 | 95,6 | 2,8 | 1,6 | | | |
| 6 | 95,8 | 3,0 | 1,2 | | | |
| 7 | 62,2 | 1,8 | 1,0 | | | 35 |
| 8 | 95,9 | 3,3 | 0,8 | | | |
| 9 | 65,8 | 3,2 | 1,0 | | 30,0 | |
| 10** | 38,3 | 1,2 | 0,5 | | 60,0 | |
| 11 | 92,9 | 2,9 | 1,1 | 3,0 | | |
| 12 | 95,8 | 3,0 | 1,1 | | | |

Le tableau 2 résume les résultats obtenus.

L'analyse chimique moyenne des différents produits testés est estimée en pourcentages massiques sur la base des oxydes. Le complément à 100 % correspond à des impuretés.

Tableau 2

| n° | Analyse chimique (en % massique) | | | | Rapports massiques | | Rapports molaires | | | | | |
|---|---|---|---|---|---|---|---|---|---|---|---|---|
| | $Cr_2O_3$ | $TiO_2$ | MgO | $ZrO_2$ | $TiO_2$ / MgO | $TiO_2$ / $Cr_2O_3$ | $TiO_2$ / MgO | $TiO_2$ / $Cr_2O_3$ | Densité (%) | Densité apparente | Ic | Is (%/s) |
| 1** | 94,5 | 3,8 | | | - | 0,040 | | | 84 | 4,33 | 100 | $8,7 \times 10^{-6}$ |
| 2** | 98,8 | 0,8 | 0,4 | | 2,0 | 0,008 | 1,0 | 0,02 | 70 | 3,62 | ND | ND |
| 3** | 94,0 | 4,2 | 1,7 | | 2,5 | 0,045 | 1,3 | 0,09 | 88 | 4,61 | ND | ND |
| 4** | 92,0 | 6,1 | 1,7 | | 3,7 | 0,066 | 1,9 | 0,13 | 93 | 4,71 | 105 | ND |
| 5 | 95,6 | 3,6 | 0,5 | | 7,1 | 0,038 | 3,6 | 0,07 | 94 | 4,87 | 139 | $2,7 \times 10^{-6}$ |
| 6 | 95,8 | 3,6 | 0,4 | | 9,5 | 0,038 | 4,8 | 0,07 | 93 | 4,81 | 155 | $3,3 \times 10^{-6}$ |
| 7 | 95,8 | 3,7 | 0,33 | | 11,2 | 0,039 | 5,6 | 0,07 | 92 | 4,78 | 135 | $3,7 \times 10^{-6}$ |
| 8** | 95,9 | 3,6 | 0,25 | | 14,4 | 0,038 | 7,3 | 0,07 | 94 | 4,87 | ND | $5,5 \times 10^{-6}$ |
| 9 | 93,4 | 4,8 | 0,33 | 1,1 | 14,5 | 0,051 | 7,4 | 0,10 | 91 | 4,48 | 134 | $5,4 \times 10^{-6}$ |
| 10** | 93,9 | 3,8 | 0,15 | 2,1 | 24,4 | 0,040 | 12,3 | 0,08 | 90 | 4,39 | 95 | $9,2 \times 10^{-6}$ |
| 11 | 92,9 | 3,5 | 0,38 | 3,0 | 9,4 | 0,038 | 4,7 | 0,07 | 93 | 4,85 | 117 | $3,2 \times 10^{-6}$ |
| 12 | 95,8 | 3,7 | 0,38 | | 9,5 | 0,038 | 4,8 | 0,07 | 94 | 4,85 | 151 | $3,2 \times 10^{-6}$ |
| (**) : exemples hors invention ; ND = non disponible | | | | | | | | | | | | |

Le tableau 2 montre qu'il est nécessaire d'avoir un rapport molaire $TiO_2$ / MgO supérieur à 1,5 pour obtenir une densification suffisante et inférieur à 9 pour avoir une résistance à la corrosion suffisante.

Le tableau 2 montre que les produits selon l'invention testés présentent une résistance à la sublimation considérablement améliorée.

La résistance à la corrosion des produits selon l'invention est supérieure à celle du produit de référence comme le montrent les exemples 6, 7 et 9. Par contre, l'exemple 4 montre que si le rapport molaire $TiO_2$ / $Cr_2O_3$ devient supérieur à 0,12 alors l'amélioration de la résistance à la corrosion est moindre, malgré une bonne densification.

Bien entendu, la présente invention n'est pas limitée aux modes de réalisation décrits et représentés, fournis à titre d'exemples illustratifs et non limitatifs.

**Revendications**

1. Produit fritté présentant une composition chimique moyenne telle que, en pourcentages massiques sur la base des oxydes:

$$Cr_2O_3 : 80,0 - 99,0 \%$$

$$0,5 \% \leq TiO_2 \leq 9,0 \%$$

$$0,3 \% < MgO \leq 3,0 \%$$

$$ZrO_2 < 4,5\%$$

   pourvu que le rapport molaire $TiO_2$ / MgO soit compris entre 1,5 et 9,0 et que le rapport molaire $TiO_2$/ $Cr_2O_3$ soit inférieur à 0,12,
   le produit comportant moins de 2,0 %, en masse sur la base des oxydes, d'oxydes autres que Cr203, $TiO_2$, MgO et Zr02.

2. Produit selon la revendication précédente, la densité apparente du produit étant supérieure à 4,0 g/cm$^3$.

3. Produit selon l'une quelconque des revendications précédentes, dans lequel les rapports molaires respectent les conditions suivantes :

$$TiO_2 / MgO > 2,5 \text{ et/ou } TiO_2 / MgO < 8,0.$$

4. Produit selon l'une quelconque des revendications précédentes, comportant au moins 0,5 de $ZrO_2$, en pourcentage massique sur la base des oxydes.

5. Produit selon l'une quelconque des revendications précédentes, la teneur en MgO étant inférieure à 1,5 %, en pourcentage massique sur la base des oxydes.

6. Produit selon l'une quelconque des revendications précédentes, comportant moins de 1,0 % en masse sur la base des oxydes d'oxydes autres que $Cr_2O_3$, $TiO_2$, MgO et $ZrO_2$.

7. Produit selon l'une quelconque des revendications précédentes, fabriqué à partir d'une charge de départ dans laquelle au moins les oxydes $Cr_2O_3$, MgO, $TiO_2$ sont présents sous la forme de particules desdits oxydes et éventuellement de particules de chamotte desdits oxydes, l'ensemble desdites particules formant un mélange de poudres présentant une taille médiane inférieure à 50 $\mu$m.

8. Produit selon la revendication précédente, fabriqué à partir d'une charge de départ dans laquelle au moins les oxydes $Cr_2O_3$, MgO, $TiO_2$ sont présents sous la forme de particules desdits oxydes et éventuellement de particules de chamotte desdits oxydes, l'ensemble desdites particules formant un mélange de poudres présentant une taille médiane inférieure à 10 $\mu$m.

9.  Produit selon l'une quelconque des revendications précédentes, fabriqué à partir d'une charge de départ comportant au moins 10 % de chamotte, en pourcentage massique sur la base des oxydes.

10.  Produit selon l'une quelconque des revendications précédentes, fabriqué à partir d'une charge de départ dans laquelle les poudres d'oxydes et éventuellement la chamotte présentent chacune une taille médiane inférieure à 150 $\mu$m.

11.  Produit selon l'une quelconque des revendications précédentes, dans lequel $Fe_2O_3$ < 0,2 % et/ou $P_2O_5$ < 1 % et/ou $SiO_2$ < 0,5 %.

12.  Produit selon l'une quelconque des revendications précédentes, sous la forme d'un bloc présentant une masse supérieure à 5 kg.

13.  Installation comportant un produit selon l'une quelconque des revendications précédentes, ledit produit étant disposé dans une région de ladite installation où il est susceptible d'entrer en contact avec un environnement oxydant à plus de 1000°C ou avec des fumées émises par du verre en fusion.

14.  Cuve comportant un produit selon l'une quelconque des revendications 1 à 11, ledit produit étant disposé dans une région de ladite cuve où il est susceptible d'entrer en contact avec un verre en fusion.

**Patentansprüche**

1.  Sinterprodukt, welches eine mittlere chemische Zusammensetzung in Massenprozent auf der Basis von Oxiden aufweist, derart, dass

$$Cr_2O_3 : \qquad 80,0 - 99,0\%$$

$$0,5\% \leq TiO_2 \leq 9,0\ \%$$

$$0,3\% < MgO \leq 3,0\%$$

$$ZrO_2 < 4,5\%,$$

wobei vorgesehen ist, dass das molare Verhältnis $TiO_2$ / MgO zwischen 1,5 und 9,0 liegt und das molare Verhältnis $TiO_2$ / $Cr_2O_3$ kleiner als 0,12 ist, wobei das Produkt weniger als 2% an Masse auf der Basis von Oxiden von Oxiden aufweist, die andere als $Cr_2O_3$, $TiO_2$, MgO und $Cr_2O_3$ sind.

2.  Produkt nach dem vorhergehenden Anspruch, wobei die scheinbare Dichte des Produkts größer als 4,0 g/cm$^3$ ist.

3.  Produkt nach einem der vorhergehenden Ansprüche, in welchem die molaren Verhältnisse folgende Bedingungen erfüllen:

$$TiO_2 / MgO > 2,5 \text{ und/oder } TiO_2 / MgO < 8,0.$$

4.  Produkt nach einem der vorhergehenden Ansprüche, welches mindestens 0,5 an $ZrO_2$ in Massenprozent auf der Basis von Oxiden aufweist.

5.  Produkt nach einem der vorhergehenden Ansprüche, bei dem der Gehalt an MgO kleiner als 1,5% in Massenprozent auf der Basis von Oxiden beträgt.

6. Produkt nach einem der vorhergehenden Ansprüche, welches auf der Basis von Oxiden weniger als 1,0% an Masse von Oxiden aufweist, die andere als $Cr_2O_3$, $TiO_2$, MgO und $ZrO_2$ sind.

7. Produkt nach einem der vorhergehenden Ansprüche, welches ausgehend von einer Ausgangscharge hergestellt ist, in der wenigstens die Oxide $Cr_2O_3$, MgO, $TiO_2$ in Form von Teilchen dieser Oxide vorhanden sind und eventuell von Schamotte-Teilchen dieser Oxide, wobei die Gesamtheit dieser Teilchen eine Pulvermischung mit einer mittleren Größe von kleiner 50 $\mu$m bildet.

8. Produkt nach dem vorhergehenden Anspruch, welches ausgehend von einer Ausgangscharge hergestellt ist, in der wenigstens die Oxide $Cr_2O_3$, MgO, $TiO_2$ in Form von Teilchen dieser Oxide und eventuell von Schamotte-Teilchen dieser Oxide vorhanden sind, wobei die Gesamtheit dieser Teilchen eine Pulvermischung mit einer mittleren Größe von kleiner 10 $\mu$m bildet.

9. Produkt nach einem der vorhergehenden Ansprüche, welches ausgehend von einer Ausgangscharge hergestellt ist, die mindestens 10% Schamotte in Massenprozenten auf der Basis von Oxiden aufweist.

10. Produkt nach einem der vorhergehenden Ansprüche, welches ausgehend von einer Ausgangscharge hergestellt ist, in der die Oxidpulver und eventuell das Schamotte jeweils eine mittlere Größe kleiner 150 $\mu$m aufweisen.

11. Produkt nach einem der vorhergehenden Ansprüche, in dem $Fe_2O_3 < 0,2\%$ und/oder $P_2O_5 < 1\%$ und/oder $SiO_2 < 0,5\%$ ist.

12. Produkt nach einem der vorhergehenden Ansprüche in Form eines Blocks mit einer Masse von größer als 5 kg.

13. Vorrichtung, welche ein Produkt gemäß einem der vorhergehenden Ansprüche aufweist, wobei das Produkt in einem Bereich der Vorrichtung angeordnet ist, wo es in Kontakt mit einer oxidierenden Umgebung bei mehr als 1000°C kommen kann oder mit von schmelzendem Glas emittierten Rauch.

14. Wanne mit einem Produkt nach einem der Ansprüche 1 bis 11, wobei das Produkt in einem Bereich der Wanne angeordnet ist, wo es in Kontakt mit einer Glasschmelze kommen kann.

**Claims**

1. Sintered product having an average chemical composition such that, in percentages by weight on the basis of the oxides:

$$Cr_2O_3 : 80.0 - 99.0\ \%$$

$$0.5\ \% \leq TiO_2 \leq 9.0\ \%$$

$$0.3\ \% < MgO \leq 3.0\ \%$$

$$ZrO_2 < 4.5\%$$

providing that the $TiO_2$/MgO molar ratio is between 1.5 and 9.0 and the $TiO_2$/$Cr_2O_3$ molar ratio is less than 0.12, the product comprising less than 2.0%, by weight on the basis of the oxides, of oxides other than $Cr_2O_3$, $TiO_2$, MgO and $ZrO_2$.

2. Product according to the preceding claim, the bulk density of the product being greater than 4.0 g/cm$^3$.

3. Product according to either of the preceding claims, in which the molar ratios meet the following conditions:

$$TiO_2/MgO > 2.5, \text{ and/or } TiO_2/MgO < 8.0.$$

4. Product according to any one of the preceding claims, comprising at least 0.5 % $ZrO_2$, as a percentage by weight on the basis of the oxides.

5. Product according to any one of the preceding claims, the MgO content being less than 1.5%, as a percentage by weight on the basis of the oxides.

6. Product according to any one of the preceding claims, comprising less than 1.0% by weight on the basis of the oxides of oxides other than $Cr_2O_3$, $TiO_2$, MgO and $ZrO_2$.

7. Product according to any one of the preceding claims, manufactured from a feedstock in which at least the oxides $Cr_2O_3$, MgO and $TiO_2$ are present in the form of particles of said oxides and optionally grog particles of said oxides, said particles together forming a powder blend having a median size of less than 50 $\mu$m.

8. Product according to the preceding claim, manufactured from a feedstock in which at least the oxides $Cr_2O_3$, MgO and $TiO_2$ are present in the form of particles of said oxides and optionally grog particles of said oxides, said particles together forming a powder blend having a median size of less than 10 $\mu$m.

9. Product according to any one of the preceding claims, manufactured from a feedstock comprising at least 10 % grog as a percentage by weight on the basis of the oxides.

10. Product according to any one of the preceding claims, manufactured from a feedstock in which the oxide powders and optionally the grog each have a median size of less than 150 $\mu$m.

11. Product according to any one of the preceding claims, in which $Fe_2O_3 < 0.2$ % and/or $P_2O_5 < 1$ % and/or $SiO_2 < 0.5$ %.

12. Product according to any one of the preceding claims, in the form of a block having a mass of greater than 5 kg.

13. Installation comprising a product according to any one of the preceding claims, said product being placed in a region of said installation where it is likely to come into contact with an oxidizing environment at a temperature above 1000°C or with flue gas emitted by molten glass.

14. Tank comprising a product according to any one of Claims 1 to 11, said product being placed in a region of said tank where it is likely to come into contact with a molten glass.

## RÉFÉRENCES CITÉES DANS LA DESCRIPTION

**Documents brevets cités dans la description**

- FR 2647435
- EP 546432 A
- WO 2010119422 A
- SU 442175
- US 4724224 A

**Littérature non-brevet citée dans la description**

- **G. ROUTSCHKA et al.** Taschenbuch Feuerfeste Werkstoffe: Aufbau, Eigenschaften, Prüfung. Vulkan Verlag, 2007
- *Chromoxid- und Zinnoxid-Werkstoffe,* 143-147